# EUROPÄISCHE PATENTSCHRIFT

(11) **EP 2 668 607 B1**
(45) Veröffentlichungstag und Bekanntmachung des Hinweises auf die Patenterteilung: **04.04.2018**
(21) Anmeldenummer: 12717242.7
(22) Anmeldetag: 11.04.2012
(51) Int. Cl.: G05B 19/042, G06F 21/86

(54) **VERFAHREN ZUR ÜBERWACHUNG EINES TAMPERSCHUTZES SOWIE ÜBERWACHUNGSSYSTEM FÜR EIN FELDGERÄT MIT TAMPERSCHUTZ**
METHOD FOR MONITORING A TAMPER PROTECTION AND MONITORING SYSTEM FOR A FIELD DEVICE HAVING TAMPER PROTECTION
PROCÉDÉ DE SURVEILLANCE D'UNE PROTECTION ANTI-MANIPULATION ET SYSTÈME DE SURVEILLANCE D'UN APPAREIL DE TERRAIN ÉQUIPÉ D'UNE PROTECTION ANTI-MANIPULATION

(30) Priorität: 18.04.2011 DE 102011007572
(43) Veröffentlichungstag der Anmeldung: 04.12.2013
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2012/056517
(87) Internationale Veröffentlichungsnummer: WO 2012/143271

(56) Entgegenhaltungen:
- WO-A1-2004/078787
- DE-A1- 10 339 349
- TUYL P ET AL: "Strong authentication with physical unclonable functions", 1. Januar 2007 (2007-01-01), SECURITY, PRIVACY, AND TRUST IN MODERN DATA MANAGEMENT : WITH 13 TABLES, SPRINGER, BERLIN, DE, PAGE(S) 133 - 148, XP009139190, ISBN: 978-3-540-69860-9 das ganze Dokument

## Beschreibung

Die Erfindung betrifft ein Verfahren zur Überwachung eines Tamperschutzes, ein Überwachungssystem für ein Feldgerät mit Tamperschutz und eine Verwendung eines Überwachungssystems.

Feldgeräte, beispielsweise in Form von Verkehrszeichenanlagen zur Verkehrsregelung, Signalanlagen für Züge, Weichen, etc., sind üblicherweise mit einer Leitstelle oder einem Stellwerk zu deren Betätigung und Überwachung verbunden. Die Kommunikation zwischen Feldgerät und Leitstelle kann dabei sowohl drahtgebunden mittels entsprechend verlegter Kabel erfolgen oder auch drahtlos durch eine Funkverbindung.

Um nun eine physikalische Manipulation an einem Feldgerät durch einen möglichen Angreifer erkennen zu können, können entsprechende Sensoren, beispielsweise Bewegungssensoren angeordnet werden. Um eine Manipulation von elektronischen Schaltungen in dem Feldgerät selbst zu erschweren, sind darüber hinaus Hardware-Security-integrierte Schaltungen bekannt geworden, welche kryptographische Schlüssel speichern und kryptographische Operationen durchführen können. Derartige integrierte Schaltungen verfügen üblicherweise über einen Tamperschutz, beispielsweise in Form von direkt auf der integrierten Schaltung angeordneten Sensoren. Diese sind dazu ausgebildet, ein unbefugtes Öffnen der integrierten Schaltung zu erkennen.

Eine solche Hardware-Security-integrierte Schaltung ist beispielsweise als "Trusted Platform Module" bekannt geworden, deren Daten unter http://de.wikipedia.org/wiki/trusted_platform_module abrufbar sind. Derartige integrierte Schaltungen werden beispielsweise in PCs oder Notebooks eingebaut.

Schließlich ist es aus dem Bereich der Einbruchmeldeanlagen und Alarmanlagen für Gebäude bekannt geworden, Kontakte an Türen und Fenstern und/oder Bewegungsmelder einzusetzen, um einen Einbruch oder ein unbefugtes Öffnen oder Eindringen in das Gebäude oder einen Raum zu signalisieren. Im Falle eines Einbruchs in ein Gebäude wird beispielsweise ein Alarm durch eine Sirene oder Ähnliches ausgelöst und es ist auch möglich, gleichzeitig eine Polizeieinsatzzentrale zu kontaktieren. Die in Einbruchmeldeanlagen oder in Alarmanlagen verwendeten Sensoren selbst können zum Schutz der Alarmanlage gegen Manipulationen mit sogenannten Tamper-Sensoren ausgestattet sein, die eine Manipulation der Einbruchmeldeanlage oder der Alarmanlage erkennen, insbesondere, wenn deren Gehäuse geöffnet und/oder ein Sensor demontiert wird. Die Tamper-Sensoren übertragen dann die Information an die Alarmanlage, die wiederum einen Alarm auslöst.

Um Teile einer Leiterplatte oder eine ganze Leiterplatte vor einer Manipulation zu schützen, ist es weiter bekannt geworden, auf die Leiterplatte derart Metallplatten aufzuschrauben, so dass insgesamt ein Kondensator gebildet wird. Dessen Kapazität wird dann ständig überwacht, sodass bei einem Abweichen des üblichen Kapazitätswertes, zum Beispiel durch Berühren der Metallplatte oder deren Entfernen, eine Veränderung der Kapazität auftritt. Wird eine Veränderung der Kapazität festgestellt, kann ein Alarm ausgelöst werden und ein Speicher auf der Platine, der beispielsweise sensible Daten enthält, gelöscht werden, so dass ein Angreifer keinen Zugriff auf die sensiblen Daten erhält.

Aus der WO 2004/078787 A1 vom 16. September 2004 ist ein Verfahren bekannt, bei dem Transportgut mit einer tampersicheren Verpackung umgeben ist, die tamper-relevante Ereignisse während des Transportes signiert aufzeichnet und somit dem Empfänger mittels eines Zertifikats bescheinigt, dass das Transportgut korrekt behandelt wurde. Eine Aufgabe der vorliegenden Erfindung ist es, ein Verfahren zur Überwachung eines Tamperschutzes eines Feldgeräts und ein Überwachungssystem für ein Feldgerät mit Tamperschutz zur Verfügung zu stellen, bei welchem ein Tamperschutz einfach und kostengünstig ermöglicht wird. Gleichzeitig sollen diese flexibel für eine Vielzahl von unterschiedlichen Geräten einfach und kostengünstig nachrüstbar und anpassbar sein und ein gewünschtes Sicherheitsniveau gegen physikalische Manipulation bereitstellen.

Diese Aufgabe wird durch ein Verfahren zur Überwachung eines Tamperschutzes eines Feldgeräts gelöst, umfassend die Schritte Überprüfen, ob eine Manipulation an dem Feldgerät erfolgt ist, Ausgeben eines Nicht-Manipulations-Zertifikats, falls ein negatives Überprüfungsergebnis ermittelt wurde, Übertragen des Nicht-Manipulations-Zertifikats, Überprüfen des Nicht-Manipulations-Zertifikats durch eine Registrierungseinrichtung, Festlegen eines aktiven Status des Feldgeräts durch die Registrierungseinrichtung, falls das Nicht-Manipulations-Zertifikat gültig ist, Überprüfen des Feldgeräts durch eine Überwachungseinrichtung mittels Abfragen des Status des Feldgeräts und Übertragen von Feldgerätdaten an die Überwachungseinrichtung, Akzeptieren der Feldgerätdaten durch die Überwachungseinrichtung, falls ein aktiver Status des Feldgeräts vorliegt.

Diese Aufgabe wird ebenfalls durch ein Überwachungssystem für ein Feldgerät mit Tamperschutz, insbesondere geeignet zur Durchführung eines Verfahrens gemäß zumindest einem der Ansprüche 1-5 gelöst, umfassend eine Tamperüberwachungseinrichtung, welche dazu ausgebildet ist, das Feldgerät zum Tamperschutz zu überwachen, eine Registrierungseinrichtung zur Registrierung und Statusüberwachung des Feldgeräts, eine Überwachungseinrichtung zum Steuern und Überwachen des Feldgeräts, wobei die Tamperüberwachungseinrichtung ausgebildet ist, zu überprüfen, ob eine Manipulation an dem Feldgerät erfolgt ist und ein Nicht-Manipulations-Zertifikat ausgibt, falls ein negatives Überprüfungsergebnis ermittelt wurde, und wobei die Registrierungseinrichtung ausgebildet ist, das Nicht-Manipulations-Zertifikat zu überprüfen, und einen aktiven Status des Feldgeräts bei gültigem Nicht-Manipulations-Zertifikat festzulegen, und wobei die Überwachungseinrichtung ausgebildet ist, einen Status des Feldgeräts zu überprüfen, und wobei die Überwachungseinrichtung ausgebildet ist, Feldgerätdaten zu akzeptieren, falls ein aktiver Status des Feldgeräts vorliegt.

Diese Aufgabe wird ebenfalls durch die Verwendung eines Überwachungssystems gemäß zumindest einem der Ansprüche 6-10 zur Überwachung einer Verkehrsanlage oder zur Überwachung eines Umspannwerks gelöst.

Ein damit erzielter Vorteil ist, dass ein Tamperschutz auf einfache Weise und ohne größeren Aufwand insbesondere auch bei bereits vorhandenen Feldgeräten nachgerüstet werden kann. Ein weiterer Vorteil ist, dass die zu überwachenden Feldgeräte entwickelt und hergestellt werden können, ohne dass speziell ausgebildete Tamperschutzmaßnahmen im Feldgerät selbst berücksichtigt werden müssen. Durch das Verfahren zur Überwachung des Tamperschutzes wird auch lediglich das Feldgerät und/oder ein in dem Feldgerät hinterlegter Sicherheitsschlüssel gesperrt, sodass eventuell aus einem Speicher des Feldgeräts ausgelesene Daten, insbesondere der eventuelle ausgelesene Sicherheitsschlüssel, durch einen Angreifer diesem keinen Nutzen bringen. Ein weiterer Vorteil ist, dass eine derartige Überwachung eines Tamperschutzes für viele unterschiedliche Arten von Feldgeräten verwendet werden kann, was die Herstellungskosten für die jeweiligen Feldgeräte erheblich senkt. Der Tamperschutz muss lediglich einmalig entwickelt werden und nicht für jeden Feldgerätetyp gesondert. Darüber hinaus wird eine direkte Kommunikation zwischen der Tamperschutzüberwachungsvorrichtung und dem Feldgerät nicht benötigt. Auch dies spart Herstellungskosten.

Weitere vorteilhafte Weiterbildungen der Erfindung sind in den Unteransprüchen beschrieben.

Zweckmäßigerweise erfolgt das Übertragen des Nicht-Manipulations-Zertifikats an die Registrierungseinrichtung mittels des Feldgeräts. Auf diese Weise werden keine zusätzlichen Schnittstellen zum Übertragen des Nicht-Manipulations-Zertifikats benötigt, sondern es können bereits bestehende Kommunikationskanäle oder -leitungen des Feldgeräts genutzt werden. Insgesamt wird also der Herstellungsaufwand für eine Tamperüberwachungseinrichtung für das Feldgerät gesenkt.

Vorteilhafterweise erfolgt das Übertragen des Nicht-Manipulations-Zertifikats im Wesentlichen zeitgleich mit einem Übertragen der Feldgerätdaten, wobei insbesondere das Nicht-Manipulations-Zertifikat und die Feldgerätdaten an eine gemeinsame Leiteinrichtung, umfassend die Registrierungseinrichtung und die Überwachungseinrichtung übertragen werden. Der damit erzielte Vorteil ist, dass damit auf besonders schnelle und zuverlässige Weise überprüft werden kann, ob eine physikalische Manipulation des Feldgeräts stattgefunden hat.

Zweckmäßigerweise erfolgt das Übertragen des Nicht-Manipulations-Zertifikats mittels des Internet und/oder mittels zumindest eines Mobilfunknetzes und/oder mittels zumindest eines Satellitennetzes. Der damit erzielte Vorteil ist, dass damit auf einfache Weise, insbesondere wenn mehrere Übertragungsarten parallel verwendet werden, eine möglichst zuverlässige Übertragung gewährleistet ist. Gleichzeitig können übliche Übertragungswege genutzt werden, die kostengünstig sind, da die für die Übertragung benötigten Vorrichtungen in hoher Stückzahl verfügbar sind.

Zweckmäßigerweise werden zumindest die Schritte Überprüfen, ob eine Manipulation an dem Feldgerät erfolgt ist, Ausgeben eines Nicht-Manipulations-Zertifikats, falls ein negatives Überprüfungsergebnis ermittelt wurde und Übertragen des Nicht-Manipulations-Zertifikats in regelmäßigen zeitlichen Abständen durchgeführt. Der Vorteil dabei ist, dass damit zuverlässig bei einem Ausbleiben der Übermittlung des Nicht-Manipulations-Zertifikats der Status des entsprechenden Feldgeräts als inaktiv festgelegt wird.

Vorteilhafterweise ist bei dem Überwachungssystem eine Leiteinrichtung angeordnet, umfassend die Registrierungseinrichtung und die Überwachungseinrichtung. Der damit erzielte Vorteil ist, dass dadurch keine zusätzlichen externen Schnittstellen angeordnet, oder Kabel oder ähnliches verlegt werden müssen, um das Nicht-Manipulations-Zertifikat zu überprüfen. Gleichzeitig können Feldgerätdaten und Nicht-Manipulations-Zertifikat auf den bereits vorhandenen Kommunikationskanälen zwischen Feldgerät und Überwachungseinrichtung übertragen werden, was die Bedienung, Steuerung und Überwachung des Feldgeräts wesentlich vereinfacht.

Zweckmäßigerweise ist die Leiteinrichtung in Form eines SCADA-Leitstandes oder eines ERP-Systems ausgebildet. Der damit erzielte Vorteil ist, dass damit auf einfache und zuverlässige Weise eine Leiteinrichtung zur Verfügung gestellt wird. Darüber hinaus ist eine derartige Leiteinrichtung nicht nur zum Überwachen eines Tamperschutzes eines Feldgeräts ausgebildet, sondern kann auch noch zusätzliche Aufgaben wie beispielsweise eine Visualisierung, ein Regeln oder dergleichen von weiteren Systemen oder Vorrichtungen vornehmen.

Zweckmäßigerweise umfasst zumindest eine der Einrichtungen eine Kommunikationsschnittstelle zum Internet, zu einem Mobilfunknetz und/oder zu einem Satellitennetz. Der damit erzielte Vorteil ist, dass damit, insbesondere wenn mehrere Übertragungsnetze parallel verwendet werden, eine möglichst zuverlässige Übertragung gewährleistet ist. Gleichzeitig können bereits vorhandene Übertragungswege genutzt werden, die kostengünstig sind, da die für die Übertragung benötigten Vorrichtungen gut verfügbar sind.

Vorteilhafterweise weist die Tamperüberwachungseinrichtung eine autonome Energieversorgung auf. Auf diese Weise wird eine physikalische Manipulation der Tamperüberwachungseinrichtung selbst reduziert. Gleichzeitig wird die Ausfallsicherheit der Tamperüberwachungseinrichtung erhöht, da eine externe Energieversorgung nicht nötig ist und so bei einem Stromausfall die Tamperüberwachungseinrichtung trotzdem weiter das Feldgerät überwacht.

Weitere Merkmale und Vorteile der Erfindung ergeben sich aus der nachfolgenden Beschreibung von Ausführungsbeispielen anhand der Zeichnung.

Dabei zeigt in schematischer Form
- Fig. 1: ein Überwachungssystem für ein Feldgerät mit Tamperschutz gemäß einer ersten Ausführungsform der vorliegenden Erfindung;
- Fig. 2: ein Überwachungssystem für ein Feldgerät mit Tamperschutz gemäß einer zweiten Ausführungsform der vorliegenden Erfindung;
- Fig. 3: ein Überwachungssystem für ein Feldgerät mit Tamperschutz gemäß einer dritten Ausführungsform der vorliegenden Erfindung;
- Fig. 4a,4b: Tamperüberwachungseinrichtungen gemäß einer ersten und zweiten Ausführungsform;
- Fig. 5: ein Verfahren zur Überwachung eines Tamperschutzes eines Feldgeräts gemäß einer ersten Ausführungsform der vorliegenden Erfindung.

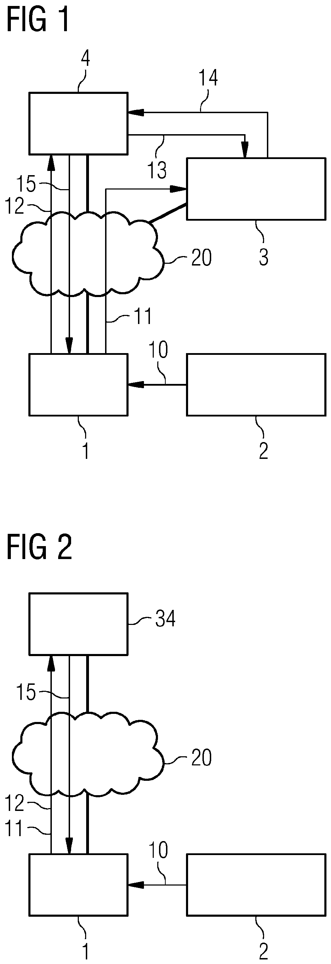

Fig. 1 zeigt ein Überwachungssystem für ein Feldgerät mit Tamperschutz gemäß einer ersten Ausführungsform der vorliegenden Erfindung.

In Fig. 1 bezeichnet Bezugszeichen 1 ein Feldgerät. Das Feldgerät 1 ist mit einer Tamperüberwachungseinrichtung 2 verbunden, welche ausgebildet ist, das Feldgerät 1 dahingehend zu überwachen, ob das Feldgerät 1 physikalisch manipuliert wird. Das Feldgerät 1 ist weiterhin mit einer Registrierungseinrichtung 3 zur Registrierung und Statusüberwachung des Feldgeräts 1 verbunden. Die Registrierungseinrichtung 3 tauscht wiederum Daten mit einer Überwachungseinrichtung 4 zur Steuerung und Überwachung des Feldgeräts 1 aus. Die Überwachungseinrichtung 4 ist gemäß Figur 1 über das Internet 20 mit dem Feldgerät 1 verbunden.

Die Tamperüberwachungseinrichtung 2 stellt, soweit sie keine physikalische Manipulation oder einen Tamper-Event erkannt hat, ein Nicht-Manipulations-Zertifikat oder eine Non-Tampering-Assertion NTA aus und überträgt (Bezugszeichen 10) diese an das durch die Tamperüberwachungseinrichtung 2 geschützte Feldgerät 1. Die Non-Tampering-Assertion wird dann beispielsweise an eine Registrierungseinrichtung 3, die in Form eines Device-Registry-Servers ausgebildet ist, übertragen (Bezugszeichen 11). Dieser sperrt das Feldgerät 1, dessen Sicherheitsmerkmal oder dessen Security-Credentials, die beispielsweise in Form von Zertifikaten, Schlüsseln, Passwörtern oder Feldgerätkonten vorliegen, falls während einer bestimmten Zeitspanne keine der dem Feldgerät 1 zugeordneten Tamperüberwachungseinrichtung 2 ausgestellte Non-Tampering-Assertion bei dem Device-Registry-Server 3 vorliegt oder zu diesem übertragen wird. Der Status des Feldgeräts 1 ist dann als inaktiv festgelegt.

Liegt eine gültige Non-Tampering-Assertion vor, wird der Status des Feldgeräts 1 als aktiv in der Registrierungseinrichtung 3 hinterlegt. Bereits währenddessen und/oder auch danach überträgt (Bezugszeichen 12) das Feldgerät 1 Feldgerätdaten, beispielsweise Steuerdaten oder Rückmeldungsdaten des Feldgeräts 1 an die Überwachungseinrichtung 4. Die Überwachungseinrichtung 4 kann beispielsweise als Steuerrechner, als speicherprogrammierbare Steuerung, als SCADA-Leitstand, als ERP-System oder dergleichen ausgebildet sein. Die Überwachungseinrichtung 4 prüft nun in einem weiteren Schritt (Bezugszeichen 13), ob der Status des Feldgeräts 1 aktiv ist. Hierzu fragt die Überwachungseinrichtung 4 den Status des Feldgeräts 1 bei der Registrierungseinrichtung 3 ab. Die Registrierungseinrichtung 3 überträgt (Bezugszeichen 14) den Status an die Überwachungseinrichtung 4. Ist der Status des Feldgeräts 1 gültig, akzeptiert die Überwachungseinrichtung 4 die vom Feldgerät 1 an die Überwachungseinrichtung 4 übermittelten Feldgerätdaten und kann Steuerdaten für das Feldgerät 1 übermitteln (Bezugszeichen 15).

Falls eine physikalische Manipulation am Feldgerät 1 beispielsweise durch einen Angreifer vorgenommen werden sollte, wird dies durch die Tamperüberwachungseinrichtung 2 erkannt. Die Tamperüberwachungseinrichtung 2 stellt daraufhin keine weiteren Non-Tampering-Assertions aus und es werden somit auch keine Non-Tampering-Assertions mehr an das Feldgerät 1 übermittelt. Empfängt nun die Registrierungseinrichtung 3 keinerlei Non-Tampering-Assertions mehr vom Feldgerät 1, wird der Status des Feldgeräts 1 von der Registrierungseinrichtung 3 nach einer gewissen vorgebaren Zeitspanne als inaktiv hinterlegt. Selbst wenn es somit einem Angreifer gelingen sollte, Schlüssel zur Verschlüsselung aus dem Feldgerät 1 selbst durch eine physikalische Manipulation auszulesen, kann er diese nicht dazu benutzen, auf die Überwachungseinrichtung 4 zuzugreifen, da die Überwachungseinrichtung 4 vorab durch Abfrage bei der Registrierungseinrichtung 3 den Status des Feldgeräts 1 als inaktiv erkennt oder erkannt hat und somit keinerlei Feldgerätdaten mehr vom Feldgerät 1 akzeptiert und auch keine Steuerdaten mehr an das Feldgerät 1 übermittelt

Fig. 2 zeigt ein Überwachungssystem für ein Feldgerät mit Tamperschutz gemäß einer zweiten Ausführungsform der vorliegenden Erfindung.

Im Wesentlichen zeigt Fig. 2 ein Überwachungssystem gemäß Fig. 1. Im Unterschied zur Fig. 1 ist die Registrierungseinrichtung 3 und die Überwachungseinrichtung 4 für das Feldgerät 1 in einer Leiteinrichtung 34 zusammengefasst. Hat das Feldgerät 1 eine Non-Tampering-Assertion von der Tamperüberwachungseinrichtung 2 empfangen, überträgt das Feldgerät 1 sowohl Feldgerätdaten, als auch die Non-Tampering-Assertion, über das Internet 20 an die Leiteinrichtung 34. Die Leiteinrichtung 34 überprüft zunächst die Non-Tampering-Assertion, die vom Feldgerät 1 übermittelt wurde. Ist diese gültig, werden auch die übermittelten Feldgerätdaten von der Leiteinrichtung 34 akzeptiert.

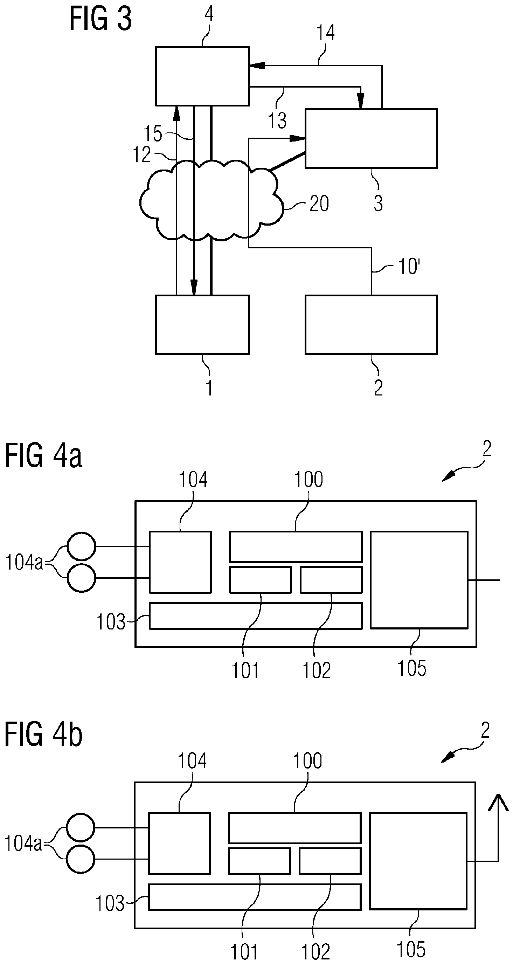

Fig. 3 zeigt ein Überwachungssystem für ein Feldgerät mit Tamperschutz gemäß einer dritten Ausführungsform der vorliegenden Erfindung.

Fig. 3 zeigt im Wesentlichen ein Überwachungssystem gemäß Fig. 1. Im Unterschied zu dem Überwachungssystem der Fig. 1 überträgt die Tamperüberwachungseinrichtung 2, soweit diese eine physikalische Manipulation am Feldgerät 1 erkannt hat, die Non-Tampering-Assertion nicht an das Feldgerät 1, sondern direkt an die Registrierungseinrichtung 3, über das Internet 20, wie in Fig. 3 gezeigt. Es ist aber ebenso möglich, die Non-Tampering-Assertion über WLAN, gemäß Figuren 1-5 über ein Mobilfunknetz, insbesondere GSM, UMTS, LTE, Wimax, CDMA oder dergleichen zu übertragen. Der damit erzielte Vorteil ist, dass damit das Feldgerät nicht modifiziert werden muss, sondern die Tamperüberwachungseinrichtung 2 unabhängig von dem Feldgerät 1 mit der Registrierungseinrichtung 3 kommunizieren kann, so dass an dem Feldgerät 1 keine Schnittstelle zur Kommunikation mit der Tamperüberwachungseinrichtung 2 bereitgestellt werden muss.

Fig. 4a, 4b zeigen Tamperüberwachungseinrichtungen gemäß einer ersten und einer zweiten Ausführungsform.

In den Fig. 4a und 4b bezeichnet Bezugszeichen 2 jeweils eine Tamperüberwachungseinrichtung. Die jeweilige Tamperüberwachungseinrichtung 2 umfasst dabei einen Steuerrechner 100, der mit einem Flash-Speicher 101 und einem RAM-Speicher 102 verbunden ist. Der Flash-Speicher 101 dient als Konfigurationsspeicher für die Tamperüberwachungseinrichtung, während der RAM-Speicher 102 als Arbeitsspeicher für den Steuerrechner 100 dient. Weiterhin ist eine Stromversorgung 103 angeordnet, die vorzugsweise so ausgebildet ist, dass beispielsweise die Stromversorgung 103 Batterie-gepuffert oder als Supercap ausgebildet ist oder diese kann Energie mittels Energy-Harvesting bereitstellen, um beispielsweise bei Stromausfällen, die Umgebungstemperatur, Vibrationen oder Luftschwingungen nutzen zu können und so eine kontinuierlich Überwachung eines Feldgeräts 1 zu ermöglichen. Ein weiterer Vorteil dabei ist, dass auch in Abwesenheit einer externen Stromversorgung die jeweilige Tamperüberwachungseinrichtung 2 zuverlässig betrieben werden kann. Die jeweilige Tamperüberwachungseinrichtung 2 umfasst jeweils eine Ein-/Ausgabeeinrichtung 104, die mit Sensoren 104a zur Tamperüberwachung verbunden sind. Die Sensoren 104a sind insbesondere außerhalb des Gehäuses der jeweiligen Tamperüberwachungseinrichtung 2 angeordnet. Die jeweilige Tamperüberwachungseinrichtung 2 kann, da sie für die spezielle Aufgabe der Tamperüberwachung des Feldgeräts 1 ausgebildet ist, in ihrem Energieverbrauch hierfür optimiert werden. Der Steuerrechner 100 kann sich dabei beispielsweise während der überwiegenden Zeit in einem sogenannten Schlafmodus befinden. Wird ein Tamper-Event durch die Tamperüberwachungseinrichtung 2 festgestellt, wird der Steuerrechner 100 wieder aktiviert.

Die Tamperüberwachungseinrichtung 2 überwacht mittels der Sensoren 104a, ob ein Tampering, das heißt, eine physikalische Manipulation des Feldgeräts 1 stattfindet. Die Sensoren können dabei beispielsweise als Bewegungssensoren, Lichtsensoren, Kontakte, Drahtgeflechte oder ähnliches ausgebildet sein. Solange keine physikalische Manipulation durch die Tamperüberwachungseinrichtung 2 festgestellt wird, stellt die Tamperüberwachungseinrichtung eine Non-Tampering-Assertion aus. Die Non-Tampering-Assertion kann dabei beispielsweise als Datenstruktur ausgebildet sein, die eine Identifikationsnummer der Tamperüberwachungseinrichtung 2 enthält und eine Zeitangabe und/oder einen Zählerwert. Die Datenstruktur kann dabei verschlüsselt und mit einer kryptographischen Prüfsumme, beispielsweise in Form einer digitalen Signatur oder eines Message Authentication Code, versehen werden. Die kryptographische Prüfsumme kann mittels eines auf der Tamperüberwachungseinrichtung 2 gespeicherten kryptographischen Schlüssels berechnet und mittels der Schnittstelle 105 bereitgestellt werden. Die Schnittstelle 105 ist in Fig. 4a drahtgebunden ausgebildet, wohingegen sie in Fig. 4b drahtlos ausgebildet ist.

Eine Non-Tampering-Assertion kann dabei auch zumindest eine der folgenden Informationen enthalten: eine Identifikationsinformation der Tamperüberwachungseinrichtung 2, zusätzlich Informationen zum Feldgerät 1, welches von der Tamperüberwachungseinrichtung 2 überwacht wird, einen Status des Feldgeräts 1, eine Information über eine physikalische Manipulation, beispielsweise einen Hinweis auf eine Gehäuseöffnung einer Temperatur bei einer zu hohen Temperaturdifferenz oder dergleichen, weiterhin eine Zeitinformation und/oder eine Signatur zur Authentifizierung und Integritätssicherung.

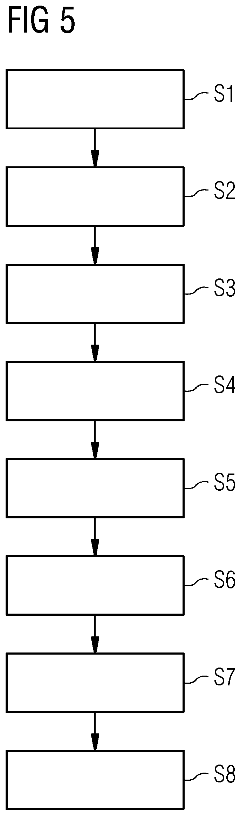

Fig. 5 zeigt ein Verfahren zur Überwachung eines Tamperschutzes eines Feldgeräts gemäß einer ersten Ausführungsform der vorliegenden Erfindung.

In Fig. 5 bezeichnet Bezugszeichen S1 den Schritt Überprüfen, ob eine Manipulation an dem Feldgerät 1 erfolgt ist, Bezugszeichen S2 den Schritt Ausgeben eines Nicht-Manipulations-Zertifikats, falls ein negatives Überprüfungsergebnis ermittelt wurde, Bezugszeichen S3 den Schritt Übertragen des Nicht-Manipulations-Zertifikats, Bezugszeichen S4 den Schritt Überprüfen des Nicht-Manipulations-Zertifikats durch eine Registrierungseinrichtung, Bezugszeichen S5 den Schritt Festlegen eines aktiven Status des Feldgeräts durch die Registrierungseinrichtung 3, falls das Nicht-Manipulations-Zertifikat gültig ist, Bezugszeichen S6 den Schritt Überprüfen des Feldgeräts 1 durch eine Überwachungseinrichtung 4 mittels Übertragen des Status des Feldgeräts 1 und Bezugszeichen S7 den Schritt Übertragen von Feldgerätdaten an die Überwachungseinrichtung 4 sowie Bezugszeichen S8 den Schritt Akzeptieren der Feldgerätdaten durch die Überwachungseinrichtung 4 als ein aktiver Status, falls ein aktiver Status des Feldgeräts 1 vorliegt.

Obwohl die vorliegende Erfindung vorstehend anhand bevorzugter Ausführungsbeispiele beschrieben wurde ist sie nicht darauf beschränkt, sondern auf vielfältige Weise modifizierbar.

Die Tamperüberwachungseinrichtung kann beispielsweise als separates Gerät ausgeführt sein, welches bei dem zu überwachenden Feldgerät oder einer Mehrzahl von zu überwachenden Feldgeräten angeordnet ist. Die Tamperüberwachungseinrichtung kann dabei als sogenannte Zwischeneinheit ausgeführt sein, das heißt zwischen dem zu überwachenden Feldgerät und einer festen Anordnung, beispielsweise einer Wand, einer Schiene oder ähnliches festgelegt werden. Die Tamperüberwachungseinrichtung kann in einem separaten, zusätzlichen Gehäuse, beispielsweise für eine Leiterplatte ausgeführt sein. Es ist ebenso möglich, die Tamperüberwachungseinrichtung und die für eine Tamperüberwachungseinrichtung gegebenenfalls vorhandenen Sensoren in das zu überwachende Feldgerät selbst einzubauen oder zu integrieren.

Unter Nicht-Manipulations-Zertifikat in der Beschreibung und insbesondere in den Ansprüchen ist nicht nur in Wesentlichen einen Non-Tampering-Bestätigungsnachricht oder eine Non-Tampering-Assertion zu verstehen, sondern ebenfalls auch eine Nachricht, die angibt, dass eine physikalische Manipulation des überwachten Feldgerätes stattgefunden hat. Wird eine physikalische Manipulation festgestellt, kann so ein Manipulationszertifikat ausgestellt werden, falls ein positives Überprüfungsergebnis ermittelt wurde. Um dieses im Sinne der Erfindung, insbesondere wie in den Ansprüchen und in den Figurenbeschreibungen dargestellt verarbeiten zu können, können das Feldgerät, Überwachungseinrichtung und die Registrierungseinrichtung entsprechend ausgebildet.

Die Registrierungseinrichtung kann weiter so ausgebildet sein, dass diese mit einer Zertifizierungsstelle verbunden ist. Die Zertifizierungsstelle kann dabei der Registrierungseinrichtung eine Zertifikatsaufhebungsliste oder Certificate Revocation List bereitstellen, in der ein Feldgerätzertifikat des von der Tamperüberwachungseinrichtung überwachten Feldgeräts aufgeführt ist. Alternativ kann das Feldgerätzertifikat durch von einem Online-Zertifikat-Status-Protokoll-Erwiderer oder Online-Certificate-Status-Protocol-Responder bereitgestellt werden. Dies ermöglicht eine Online-Übermittlung der Zertifikatsaufhebungsliste.

## Patentansprüche

1. Verfahren zur Überwachung eines Tamperschutzes eines Feldgeräts (1),
umfassend die Schritte:
Überprüfen (S1) durch eine Tamperüberwachungseinrichtung (2), ob eine Manipulation an dem Feldgerät (1) erfolgt ist,
Ausgeben (S2) eines Nicht-Manipulations-Zertifikats durch eine Tamperüberwachungseinrichtung (2), falls ein negatives Überprüfungsergebnis ermittelt wurde,
Übertragen (S3) des Nicht-Manipulations-Zertifikats,
Überprüfen (S4) des Nicht-Manipulations-zertifikats durch eine Registrierungseinrichtung (3),
Festlegen (S5) eines aktiven Status des Feldgeräts (1) durch die Registrierungseinrichtung (3), falls das Nicht-Manipulations-Zertifikat gültig ist,
Überprüfen (S6) des Feldgeräts (1) durch eine Überwachungseinrichtung (4) mittels Abfragen des Status des Feldgeräts (1), und
Übertragen (S7) von Feldgerätdaten an die Überwachungseinrichtung (4),
Akzeptieren (S8) der Feldgerätdaten durch die Überwachungseinrichtung (4), falls ein aktiver Status des Feldgeräts (1) vorliegt.

2. Verfahren gemäß Anspruch 1,
dadurch gekenntzeichnet, dass
das Übertragen (S3) des Nicht-Manipulations-Zertifikats an die Registriereinrichtung (3) mittels des Feldgeräts (1) erfolgt.

3. Verfahren gemäß zumindest einem der Ansprüche 1-2,
**dadurch gekennzeichnet, dass**
das Übertragen des Nicht-Manipulations-Zertifikats im Wesentlichen zeitgleich mit einem Übertragen der Felderätdaten erfolgt, wobei insbesondere das Nicht-Manipulations-Zertifikat und die Feldgerätedaten an eine gemeinsame Leiteinrichtung, umfassend die Registrierungseinrichtung (3) und die Überwachungseinrichtung (4) übertragen werden.

4. Verfahren gemäß zumindest einem der Ansprüche 1-3,
**dadurch gekennzeichnet, dass**
das Übertragen (S3) mittels des Internets (20) und/oder mittels zumindest eines Mobilfunknetzes und/oder mittels zumindest eines Satellitennetzes erfolgt.

5. Verfahren gemäß zumindest einen der Ansprüche 1-4,
**dadurch gekennzeichnet, dass**
zumindest die Schritte Überprüfen (S1), ob eine Manipulation an dem Feldgerät (1) erfolgt ist, Ausgeben (S2) eines Nicht-Manipulations-Zertifikats, falls ein negatives Überprüfungsergebnis ermittelt wurde und Übertragen (S3) des Nicht-Manipulations-Zertifikats in regelmäßigen zeitlichen Abständen durchgeführt werden.

6. Überwachungssystem für ein Feldgerät mit Tamperschutz, insbesondere geeignet zur Durchführung eines Verfahrens gemäß zumindest einem der Ansprüche 1-5, umfassend eine Tamperüberwachungseinrichtung (2), welche dazu ausgebildet ist, das Feldgerät (1) zum Tamperschutz zu überwachen,
eine Registrierungseinrichtung (3) zur Registrierung und Statusüberwachung des Feldgeräts (1),
eine Überwachungseinrichtung (4) zum Steuern und Überwachen des Feldgeräts (1), wobei
die Tamperüberwachungseinrichtung (2) ausgebildet ist, zu überprüfen, ob eine Manipulation an dem Feldgerät (1) erfolgt ist und ein Nicht-Manipulations-Zertifikat ausgibt, falls ein negatives Überprüfungsergebnis ermittelt wurde, und wobei
die Registrierungseinrichtung (3) ausgebildet ist, das Nicht-Manipulations-Zertifikat zu überprüften, und einen aktiven Status des Feldgeräts (1) bei gültigem Nicht-Manipulations-Zertifikat festzulegen, und wobei
die Überwachungseinrichtung (4) ausgebildet ist, einen Status des Feldgeräts (1) zu überprüfen, und wobei
die Überwachungseinrichtung (4) ausgebildet ist, Feldgerätdaten zu akzeptieren, falls ein aktiver Status des Feldgeräts (1) vorliegt.

7. Überwachungssystem gemäß Anspruch 6,
**dadurch gekennzeichnet, dass**
eine Leiteinrichtung (34) angeordnet ist, umfassend die Registrierungseinrichtung (3) und die Überwachungseinrichtung (4) umfasst.

8. Überwachungssystem gemäß zumindest einem der Ansprüche 6-7,
**dadurch gekennzeichnet, dass**
die Leiteinrichtung (34) in Form eines SCADA-Leitstandes oder eines ERP-Systems ausgebildet ist.

9. Überwachungssystem gemäß zumindest einem der Ansprüche 6-8,
**dadurch gekennzeichnet, dass**
zumindest eine der Einrichtungen (2,3,4,34) eine Kommunikationsschnittstelle zum Internet, zu einem Mobilfunknetz, und/oder zu einem Satellitennetz umfasst.

10. Überwachungssystem gemäß zumindest einem der Ansprüche 6-9,
**dadurch gekennzeichnet, dass**
die Tamperüberwachungseinrichtung (4) eine autonome Energieversorgung aufweist.

11. Verwendung eines Überwachungssystems gemäß zumindest einem der Ansprüche 6-10 zur Überwachung einer Verkehrsanlage oder zur Überwachung eines Umspannwerks.

## Claims

1. Method for monitoring a tamper protection of a field device (1),
comprising the steps:
checking (S1) by a tamper monitoring device (2) whether a manipulation has taken place at the field device (1),
outputting (S2) of a non-manipulation certificate by a tamper monitoring device (2) if a negative test result has been determined,
transmitting (S3) of the non-manipulation certificate,
checking (S4) of the non-manipulation certificate by a registration device (3),
determining (S5) an active status of the field device (1) by the registration device (3) if the non-manipulation certificate is valid,
checking (S6) of the field device (1) by a monitoring device (4) by inquiring about the status of the field device (1), and
transmitting (S7) of field device data to the monitoring device (4),
accepting (S8) of the field device data by the monitoring device (4) if the field device (1) has an active status.

2. Method according to Claim 1,
**characterized in that**
the transmitting (S3) of the non-manipulation certificate to the registration device (3) takes place by means of the field device (1).

3. Method according to at least one of Claims 1-2,
**characterized in that**
the transmitting of the non-manipulation certificate occurs essentially at the same time as a transmitting of the field device data, wherein especially the non-manipulation certificate and the field device data are transmitted to a common control device comprising the registration device (3) and the monitoring device (4).

4. Method according to at least one of Claims 1-3,
**characterized in that**
the transmitting (S3) is carried out by means of the Internet (20) and/or by means of at least one mobile radio network and/or by means of at least one satellite network.

5. Method according to at least one of Claims 1-4,
**characterized in that**
at least the steps of checking (S1) whether a manipulation has occurred at the field device (1), outputting (S2) of a non-manipulation certificate if a negative test result has been determined and transmitting (S3) of the non-manipulation certificate are carried out at regular time intervals.

6. Monitoring system for a field device having tamper protection, especially suitable for carrying out a method according to at least one of Claims 1-5, comprising
a tamper monitoring device (2) which is designed for monitoring the field device (1) for tamper protection,
a registration device (3) for registering and monitoring the status of the field device (1),
a monitoring device (4) for controlling and monitoring the field device (1), wherein
the tamper monitoring device (2) is designed for checking whether a manipulation has occurred at the field device (1) and outputs a non-manipulation certificate if a negative test result has been determined, and wherein
the registration device (3) is designed for checking the non-manipulation certificate and determining an active status of the field device (1) in the case of a valid non-manipulation certificate, and wherein
the monitoring device (4) is designed for checking a status of the field device (1), and wherein
the monitoring device (4) is designed for accepting field device data if the field device (1) has an active status.

7. Monitoring system according to Claim 6,
**characterized in that**
a control device (34) is arranged comprising the registration device (3) and the monitoring device (4).

8. Monitoring system according to at least one of Claims 6-7,
**characterized in that**
the control device (34) is designed in the form of a SCADA control board or of an ERP system.

9. Monitoring system according to at least one of Claims 6-8,
**characterized in that**
at least one of the devices (2, 3, 4, 34) comprises a communication interface to the Internet, to a mobile radio network and/or to a satellite network.

10. Monitoring system according to at least one of Claims 6-9,
**characterized in that**
the tamper monitoring device (4) has an autonomous power supply.

11. Use of a monitoring system according to at least one of Claims 6-10 for monitoring a traffic installation or for monitoring a transformer substation.

## Revendications

1. Procédé de surveillance d'une protection anti-manipulation d'un appareil de terrain (1), comprenant les étapes suivantes :
vérification (S1), par un dispositif de surveillance de manipulation (2), si l'appareil de terrain (1) a subi une manipulation,
édition d'un certificat de non manipulation par un dispositif de surveillance de manipulation (2), si le résultat de la vérification est négatif,
transmission (S3) du certificat de non manipulation,
vérification (S4) du certificat de non manipulation par un dispositif d'enregistrement (3),
fixation (S5) d'un statut actif de l'appareil de terrain (1) au moyen du dispositif d'enregistrement (3) dans le cas où le certificat de non manipulation est valable,
vérification (S6) de l'appareil de terrain au moyen d'un dispositif de surveillance (4) par consultation du statut de l'appareil de terrain (1),
transmission (S7) des données de l'appareil de terrain au dispositif de surveillance (4), et
approbation (S8) des données de l'appareil de terrain par le dispositif de surveillance (4) si l'appareil de terrain (1) a un statut actif.

2. Procédé selon la revendication 1,
**caractérisé en ce que**
la transmission (S3) du certificat de non manipulation au dispositif d'enregistrement (3) est effectuée au moyen de l'appareil de terrain (1).

3. Procédé selon au moins l'une des revendications 1 à 2,
**caractérisé en ce que**
la transmission du certificat de non manipulation est effectuée essentiellement simultanément avec une transmission des données de l'appareil de terrain, et dans lequel, notamment, le certificat de non manipulation et les données de l'appareil de terrain sont transmises à un dispositif de contrôle commun comprenant le dispositif d'enregistrement (3) et le dispositif de surveillance (4).

4. Procédé selon au moins l'une des revendications 1 à 3,
**caractérisé en ce que**
la transmission (S3) s'effectue au moyen d'Internet (20) et/ou au moyen d'au moins un réseau de téléphonie mobile et/ou au moyen d'au moins un réseau satellitaire.

5. Procédé selon au moins l'une des revendications 1 à 4,
**caractérisé en ce**
**qu'**au moins les étapes de vérification (S1) si l'appareil de terrain (1) a subi une manipulation, d'édition (S2) d'un certificat de non manipulation si le résultat de la vérification est négatif et de transmission (S3) du certificat de non manipulation sont effectuées à des intervalles de temps réguliers.

6. Système de surveillance d'un appareil de terrain doté d'une protection anti-manipulation, approprié particulièrement pour mettre en oeuvre un procédé selon l'une des revendications 1 à 5, comprenant un dispositif de surveillance de manipulation (2) qui est conçu pour surveiller l'appareil de terrain (1) quant à la protection anti-manipulation,
un dispositif d'enregistrement (3) destiné à enregistrer et à surveiller le statut de l'appareil de terrain (1),
un dispositif de surveillance (4) destiné à commander et à surveiller l'appareil de terrain (1),
dans lequel
le dispositif de surveillance de manipulation (2) est conçu de manière à vérifier si l'appareil de terrain (1) a subi une manipulation et édite un certificat de non manipulation si le résultat est négatif,
le dispositif d'enregistrement (3) est conçu de manière à vérifier le certificat de non manipulation et à fixer un statut actif de l'appareil de terrain (1) si le certificat de non manipulation est valable, et
le dispositif de surveillance (4) est conçu de manière à vérifier un statut de l'appareil de terrain (1) et à approuver des données de l'appareil de terrain si l'appareil de terrain (1) a un statut actif.

7. Système de surveillance selon la revendication 6,
**caractérisé en ce**
**qu'**un dispositif de contrôle (34) comprenant le dispositif d'enregistrement (3) et le dispositif de surveillance (4) est prévu.

8. Système de surveillance selon au moins l'une des revendications 6 à 7,
**caractérisé en ce que**
le dispositif de contrôle (34) est conçu sous forme d'un poste de contrôle SCADA ou d'un système ERP.

9. Système de surveillance selon au moins l'une des revendications 6 à 8,
**caractérisé en ce**
**qu'**au moins un des dispositifs (2, 3, 4, 34) comprend une interface de communication à Internet, à un réseau de téléphonie mobile et/ou à un réseau satellitaire.

10. Système de surveillance selon au moins l'une des revendications 6 à 9,
**caractérisé en ce que**
le dispositif de surveillance de manipulation (4) comprend une alimentation en énergie autonome.

11. Utilisation d'un système de surveillance selon au moins l'une des revendications 6 à 10 pour surveiller une installation de circulation ou pour surveiller un poste de transformation.
